Europäisches Patentamt

European Patent Office

Office européen des brevets

(11) Numéro de publication : **0 370 864 B1**

(12) **FASCICULE DE BREVET EUROPEEN**

(45) Date de publication du fascicule du brevet :
**26.05.93 Bulletin 93/21**

(51) Int. Cl.$^5$ : **C08F 4/615,** C08F 4/617,
C08F 10/02

(21) Numéro de dépôt : **89403126.9**

(22) Date de dépôt : **14.11.89**

(54) **Procédé de polymérisation de l'éthylène permettant d'obtenir un polymère de distribution large de masses moléculaires, procédé de traitement de la composante catalytique.**

(30) Priorité : **23.11.88 FR 8815261**

(43) Date de publication de la demande :
**30.05.90 Bulletin 90/22**

(45) Mention de la délivrance du brevet :
**26.05.93 Bulletin 93/21**

(84) Etats contractants désignés :
**AT BE DE ES FR GB IT NL SE**

(56) Documents cités :
**EP-A- 0 060 443
EP-A- 0 101 978
EP-A- 0 143 002**

(73) Titulaire : **ELF ATOCHEM S.A.
4 & 8, Cours Michelet La Défense 10
F-92800 Puteaux (FR)**

(72) Inventeur : **Spitz, Roger
44, Rue des Fleurs Serezin
F-69360 Saint-Symphorien d'Ozon (FR)**
Inventeur : **Malinge, Jean
Chemin de Harbious
F-64300 Orthez (FR)**
Inventeur : **Joly, Jean-François
110, Rue Pierre Brossolette
F-92320 Chatillon Sous Bagneux (FR)**

(74) Mandataire : **Foiret, Claude et al
ELF ATOCHEM S.A. Département Propriété
Industrielle La Défense 10 - Cedex 42
F-92091 Paris-La-Défense (FR)**

## Description

La présente invention concerne un procédé de polymérisation de l'éthylène permettant d'obtenir un polymère de distribution large de masses moléculaires. L'invention s'applique particulièrement à l'obtention de polyéthylène linéaire haute et basse densité. Le résultat est obtenu grâce au traitement particulier, préalable à sa mise en oeuvre avec un cocatalyseur dans la polymérisation de l'éthylène, de la composante catalytique. Préalablement à sa mise en oeuvre, la composante catalytique, constituée d'au moins un dérivé du magnésium et d'un dérivé chloré du titane sous sa forme III et/ou IV, subit une réduction de préférence par un composé métallique possédant au moins une liaison métal-carbone ou métal-hydrogène, suivie d'un traitement par un composé halogéné de métal de transition.

L'invention concerne également le procédé de traitement de la composante catalytique.

Il est entendu que par polymérisation de l'éthylène, on entend non seulement l'homopolymérisation de l'éthylène, mais encore la copolymérisation de l'éthylène avec une alpha-oléfine, telle que propylène, butène-1, ou encore hexène-1.

Les polymères de distribution large de masses moléculaires, utilisés industriellement en particulier dans les techniques d'extrusion-soufflage, se distinguent par leur polydispersité et leur indice de fluidité des polymères de distribution étroite de masses moléculaires, utilisés industriellement en particulier pour l'injection.

Les polymères de distribution de masses moléculaires étroites possèdent en moyenne une polydispersité de 4 à 6 environ, la polydispersité étant le rapport de la masse moléculaire en poids sur la masse moléculaire en nombre. Ces polymères à forte fluidité possèdent un rapport d'indice de fluidité $MFR_{5-2}$ inférieur à 3,3, ce $MFR_{5-2}$ étant selon la norme ASTM D 1238 le rapport $MI_5/MI_2$ de l'indice de fluidité sous 5 kg sur l'indice de fluidité sous 2,16 kg; le $MFR_{21-5}$ rapport des indices de fluidité sous 21,6 kg sur l'indice de fluidité sous 5 kg, $MI_{21}/MI_5$ selon la norme ASTM D 1238, étant inférieur à 10. Ces produits sont obtenus en monoréacteur par polymérisation de l'éthylène en suspension, en solution ou en phase gazeuse en présence d'un catalyseur spécifique du type Ziegler constitué d'un cocatalyseur, en général un alkylaluminium, et d'une composante catalytique contenant du Ti, Mg, Cl et éventuellement un donneur d'électrons. Les produits obtenus de distribution étroite possèdent une élasticité limitée ce qui évite le phénomène néfaste de retrait à l'injection.

De tels produits, du fait de leur manque d'élasticité sont inadaptés aux techniques demandant une résistance mécanique importante à l'état fondu, comme par exemple dans le cas de l'extrusion soufflage. Lorsque ces propriétés sont recherchées, on utilisé des polymères de distribution large de masses moléculaires possédant de préférence un rapport d'indice de fluidité $MFR_{21-5}$ supérieur à 16 pour un indice de fluidité MI5 de l'ordre de 1 à 1,5, ou un rapport $MI_5/MI_2$ supérieur à 3,5 pour des $MI_2 \cong 1$.

La fabrication industrielle de ces produits en monoréacteur présente de grandes difficultés en présence de catalyseur de type Ziegler.

Selon "Adv. in Polymer Science 51" pp. 101 à 153 (1983) "Control of Molecular - Weight in Polyolefins Synthesized with Ziegler - Natta Catalyst Systems" de U. Zucchini et G. Cecchin, document qui reflète l'art antérieur sur la question, le meilleur moyen pour obtenir un polymère de distribution large de masses moléculaires en présence d'un catalyseur du type Ziegler est d'effectuer la polymérisation en plusieurs étapes ou en "cascade" à partir de deux réacteurs successifs au moins. Toutefois, même dans ces meilleures conditions il n'est pas facile de fabriquer un polyéthylène de $MFR_{21-5}$ supérieur à 16, une condition nécessaire étant de partir de catalyseurs donnant des distributions larges en monoréacteurs. En outre ce procédé présente l'inconvénient de nécessiter au moins deux réacteurs ce qui entraîne une perte de productivité par rapport à l'importance de l'installation et un contrôle délicat du fait de l'activité de plusieurs réacteurs au lieu d'un seul.

Dans les EP-A101978 et EP-A60443 sont décrites des composantes catalytiques permettant d'obtenir par polymérisation d'oléfines des polymères de distribution étroite de masses moléculaires. Ces composantes sont préparées par déposition sur un support MgCl2 de tétrahydrocarbyloxide de titane qui est ensuite chloré par un composé aluminique chloré associé ou non à un composé organomagnésien avant d'être traité par un composé chloré du titane et/ou d'un dérivé chloré d'élément du groupe IVA ou VA.

Dans le EP-A est également décrite une composante permettant d'obtenir des polymères de distribution étroite des masses moléculaires. Cette composante est obtenue par précipitation de TiCl3 sur MgCl2 comme support par réaction de TiCl4 en présence d'alkylaluminium chloré dans un rapport agent réducteur/composé initial de transition compris entre 0,1 et 2.

Selon le FR-A-2 596 398 il est possible d'obtenir par polymérisation de l'éthylène en monoréacteur, un polymère de distribution large de masse moléculaires avec un MFR $MI_{21}/MI_5$ supérieur à 16. Pour obtenir ce résultat est utilisée comme composante catalytique un mélange de MgCl2 et de TiCl4 obtenu par cobroyage. Outre le cobroyage des composantes qui nécessite des règles industriellement complexes, le procédé présente l'inconvénient d'une mise en oeuvre d'une composante de structure mal définie, ce qui entraine la fabrication de polymère de repartition granulaire hétérogène.

Le procédé de l'invention a pour avantage de mettre en oeuvre une composante catalytique de structure contrôlée permettant la fabrication de polymère de distribution large de masses moléculaires, le rapport $MI_{21}/MI_5$ étant supérieur à 16 et pouvant dépasser 25 pour les produits de hautes masses moléculaires, en particulier pour les produits dont l'indice de fluidité $MI_2$ est inférieur à 0,5, et le rapport $MI_5/MI_2$ étant supérieur à 3,5. En outre les performances de la composante obtenue selon le FR 2 596 398 se trouvent améliorées.

Pour obtenir ces résultats l'éthylène est polymérisé en présence d'un catalyseur constitué d'un cocatalyseur choisi parmi les alkylaluminiums et d'une composante catalytique à base d'au moins Mg, Ti et Cl traité dans les conditions caractéristiques faisant l'objet de l'invention.

La caractéristique de l'invention consiste dans une première étape à faire subir à la composante catalytique un traitement de réduction, puis dans une seconde étape à traiter le produit obtenu par un compose chloré de métal de transition.

La composante catalytique initiale avant traitement est un produit connu en lui même et largement décrit dans la littérature. Elle est habituellement le résultat de la combinaison d'au moins un composé du titane, un composé de magnésium, de chlore et éventuellement un donneur ou accepteur d'électrons et de tout autre composé utilisable dans ces types de composantes.

Le composé du titane est choisi habituellement parmi les composés chlorés du titane de formule $Ti(OR)_x Cl_{4-x}$ dans laquelle :

- R est un radical hydrocarboné aliphatique ou aromatique de $C_1$ à $C_{14}$, ou $COR^1$ avec $R^1$ un radical hydrocarboné aliphatique ou aromatique de $C_1$ à $C_{14}$
- x est un nombre de 0 à 3

Le composé de magnésium est habituellement choisi parmi les composés de formule $Mg(OR^2)_n Cl_{2-n}$, dans laquelle $R^2$ est l'hydrogène ou un radical hydrocarboné linéaire ou cyclique et "n" est un nombre inférieur ou égal à 2.

Le chlore peut provenir directement de l'halogènure de titane et/ou de l'halogènure de magnésium, mais il peut également provenir d'un agent chlorant indépendant tel que l'acide chlorhydrique ou un halogènure organique comme le chlorure de butyle.

Le donneur ou accepteur d'électrons est un composé organique liquide ou solide connu pour entrer dans la composition de ces composantes catalytiques. Le donneur d'électrons peut être un composé mono ou polyfonctionnel avantageusement choisi parmi les acides carboxyliques aliphatiques ou aromatiques et leurs esters alcoyliques, les éthers aliphatiques ou cycliques, les cétones, les esters vinyliques, les dérivés acryliques, en particulier acrylates ou méthacrylates d'alcoyle, et les silanes. Conviennent notamment comme donneurs d'électrons les composés tels que paratoluate de méthyle, benzoate d'éthyle, acétate d'éthyle ou de butyle, éther éthylique, para-anisate d'éthyle, dibutylphtalate, dioctylphtalate, diisobutylphtalate, tétrahydrofuranne, dioxane, acétone, méthylisobutylcétone, acétate de vinyle, méthacrylate de méthyle et les silanes tels que phényltriéthoxysilane, les alcoxysilanes aromatiques ou aliphatiques.

L'accepteur d'électrons est un acide de Lewis, choisi de préférence parmi les chlorures d'aluminium, le trifluorure de bore, le chloranile ou encore les alcoylaluminiums et alcoylmagnésiums.

La composante catalytique se présente sous la forme d'un complexe entre au moins, Mg, Ti, Cl, le titane se trouvant sous forme chlorée de $Ti^{IV}$, de $Ti^{III}$ ou de mélange des deux, avec éventuellement un donneur ou accepteur d'électrons. La composante catalytique peut se trouver telle quelle sous forme de complexe, mais également sous forme de dépôt sur un support minéral comme $SiO_2$ ou $Al_2O_3$ ou organique par exemple de type polymère.

La composante catalytique telle que définie précédemment est dans une première étape traitée par un réducteur. Il s'agit d'un composé gazeux, liquide ou soluble dans les hydrocarbures, capable, comme il est connu de façon générale en chimie, de diminuer le degré d'oxydation du $Ti^{IV}$ et/ou $Ti^{III}$. Le réducteur utilisé est de préférence un composé métallique possédant au moins une liaison métal-carbone ou métal-hydrogène. Les composés métalliques possédant au moins une liaison métal-carbone sont habituellement choisis parmi les composés $MQ_y Cl_{z-y}$, M étant un métal des groupes I, II et III de la classification périodique et plus particulièrement Al et Mg, Q étant un radical hydrocarboné linéaire ou cyclique, "z" étant un nombre correspondant à la valence maximale du métal et "y" un nombre inférieur ou égal à "z". Dans la définition de ces composés sont également compris les produits d'addition de ces composés entre eux comme par exemple : $NaAl(C_2H_5)_4$ ou les produits obtenus en pontant par un oxygène deux composés métalliques définis précédemment comme par exemple les alumoxanes ou les aluminosiloxanes. Parmi ces composés métalliques on préfère les alumoxanes, les aluminosiloxanes, les dialkylmagnésiens et les alkylaluminiums du type $Al(R^3)_c X_d$ où

- X est Cl et
- $R^3$ représente un radical hydrocarboné saturé de $C_1$ à $C_{14}$, ou $(OR^4)$ avec $R^4$ qui est un radical hydrocarboné saturé de $C_1$ à $C_{14}$ avec $0 \leqq d \leqq 1,5$ et $c + d = 3$.

Comme exemples on peut citer : $Al(C_2H_5)_3$, $Al(C_2H_5)_2Cl$, $Al(C_4H_9)3$, $Al_2(C_2H_5)_3Cl_3$, $Al(C_6H_{13})_3$, $Al(C_8H_{17})_3$ et $Al(C_2H_5)_2(OC_2H_5)$.

Les composés métalliques possédant au moins une liaison métal-hydrogène sont habituellement choisis parmi les composés $MQ'_cX_dH_e$ où M est un métal tel que défini précédemment, Q' étant un radical hydrocarboné linéaire ou cyclique, X est Cl ou choisi parmi les radicaux Q' précédents avec $0 \leqq d \leqq 1,5$ $1 \leqq e \leqq z$ et $c + d + e = z$, z correspondant à la valence maximale de M. Parmi ces composés on peut citer les hydrures tels que $Al(C_4H_9)_2H$, $Al(C_2H_5)_2H$, $(C_2H_5)_4B_2H_2$, les hydrures mixtes tels que : aluminium-lithium : $AlLiH_4$. Il peut évidemment s'agir d'association d'hydrures entre eux ou avec des composés organométalliques définis précédemment.

Dans cette étape la composante est traitée sous atmosphère inerte par le réducteur, telle quelle ou en présence d'un diluant à la fois solvant du réducteur et inerte vis-à-vis de ce dernier ainsi que de la composante. Les hydrocarbures conviennent entre autres pour cette application. Bien que la température de réaction ne soit pas critique, pour des raisons de durée de réaction raisonnable la réduction s'effectue de préférence de la température ambiante à 150°C sous pression atmosphérique ou sous pression et mieux entre 40 et 100°C sous pression atmosphérique pour des durées de réaction de l'ordre de 10 minutes à 24 heures.

On arrête la réaction de réduction lorsqu'au moins 50 % en poids du titane initial a son degré d'oxydation réduit d'au moins une unité, par exemple quand 50 % du $Ti^{IV}$ est réduit en $Ti^{III}$ ou du $Ti^{III}$ en $Ti^{II}$. Il est cependant préférable de pousser le plus possible la réduction du titane, aussi est-il recommandé d'arrêter la réduction lorsque le degré de réduction moyen du titane est le plus voisin de II. Dans cette étape de réduction le rapport molaire du $\dfrac{\text{métal du réducteur}}{\text{titane}}$ est supérieur à 2 et mieux compris entre 10 et 50.

La réaction de réduction est arrêtée par refroidissement et lavage du produit obtenu, de préférence par un hydrocarbure, pour éliminer le réducteur en excès. Le produit résultant est éventuellement séché.

Dans la seconde étape, le produit réduit obtenu est traité par un composé chloré de métal de transition. Ce composé chloré est le plus souvent un chlorure, un alcoxychlorure ou un oxychlorure de métal de transition choisi parmi le titane, le vanadium, le chrome, le zirconium tel que par exemple le $TiCl_4$ ou $VCl_4$. Il est préférable, pour faciliter la réaction de chloration, d'utiliser un composé chloré liquide ou soluble dans un solvant inerte vis-à-vis des produits mis en contact. Le traitement s'effectue en mettant en contact en atmosphère inerte le produit réduit de la première étape avec le composé chloré. La température de contact, là encore, n'est pas critique. Pour des raisons pratiques, il est recommandé de traiter les produits en contact à une température comprise entre la température ambiante et 150°C et mieux entre 60 et 100°C pour des durées de traitement comprises entre quelques minutes et 4 heures. La quantité de composé chloré de métal de transition mis en oeuvre est de préférence d'au moins la moitié de la stoechiométrie, et mieux voisine de la stoechiométrie ou en excès par rapport à la teneur en titane du produit obtenu en fin de la première étape. Après traitement la composante est finalement récupérée sous atmosphère inerte après lavage et éventuellement séchage.

La composante catalytique obtenue après ces deux étapes de traitement est utilisée de façon classique avec un cocatalyseur habituel connu, choisi généralement parmi les alkylaluminiums, dans les procédés de polymérisation en suspension ou en phase gazeuse des oléfines.

Dans un procédé de polymérisation d'éthylène en suspension, on opère de façon habituelle dans un milieu liquide hydrocarboné à des températures pouvant aller jusqu'à 120°C et sous des pressions pouvant aller jusqu'à 250 bars.

La polymérisation d'éthylène en phase gazeuse, en présence d'hydrogène et de gaz inerte peut être effectuée dans tout réacteur permettant une polymérisation en phase gazeuse et en particulier dans un réacteur à lit agité ou à lit fluidisé. Les conditions de mise en oeuvre sont connues de l'art antérieur. On opère généralement à une température inférieure au point de fusion Tf du polymère ou copolymère à synthétiser et plus particulièrement entre 20°C et (Tf -5°C) et sous une pression telle que l'éthylène et éventuellement les autres monomères hydrocarbonés présents dans le réacteur soient essentiellement en phase vapeur.

La polymérisation peut s'effectuer en deux étapes. Dans une première étape il est possible de consolider le système catalytique en effectuant une prépolymérisation à base d'éthylène en présence des constituants du système catalytique et d'un cocatalyseur, puis en poursuivant dans une seconde étape la polymérisation par ajout d'éthylène ou d'un mélange d'éthylène et d'une alpha-oléfine tel que déjà cité. L'étape de prépolymérisation présente une formation de polymère ne dépassant pas 10 % en poids du polymère total devant être formé. Cette étape de prépolymérisation est exécutée en suspension en présence d'un diluant hydrocarboné, en phase gazeuse ou en combinaison de suspension et de phase gazeuse.

Les exemples suivants illustrent l'invention sans la limiter.

## EXEMPLE 1

### a) Préparation de la composante catalytique

8,3 g de $MgCl_2$ anhydre sont broyés 6 heures, on ajoute 0,7 ml de $TiCl_4$ et on cobroye 4 heures. Le solide récupéré est extrait du bol de broyage avec de l'heptane et séché sous vide. On obtient un produit A contenant 3 % en poids de titane. 4 g de A sont traités dans l'heptane par du triethylaluminium à la concentration de 0,85 M/l (Al/Ti = 14) pendant 3 heures à 80°C. Le solide obtenu est rincé trois fois, à l'abri de l'air, avec 50 ml d'heptane et séché sous vide. Le produit récupéré est mis en contact à l'abri de l'air avec 40 ml de $TiCl_4$ pendant 4 heures à 100°C. Après cinq lavages à l'heptane, le solide obtenu est séché sous vide. On obtient un solide B contenant 4,4 % en poids de titane et 0,7 en poids d'aluminium.

### b) Polymérisation de l'éthylène en suspension

La composante catalytique B est engagée en polymérisation en suspension. Dans un réacteur de 2,5 l en inox muni d'une agitation par pale tournant à 650 tours/minutes, on introduit dans l'ordre à température ambiante sous atmosphère inerte : 1 litre d'heptane, le trihéxylaluminium (3mM) et la composante catalytique B en quantité correspondant à 2,5 mg de Ti.

On ajoute l'hydrogène jusqu'à une pression partielle de 4,3 bars (essai 1) et 5 bars (essai 2) et on complète avec de l'éthylène en ajustant la pression pour atteindre 9 bars absolus de pression totale après chauffage à 80°C. Cette pression totale est maintenue constante pendant 1 heure par addition d'éthylène.

Au bout d'1 heure, on arrête l'injection d'éthylène, on refroidit à température ambiante, le catalyseur est désactivé par addition d'une solution de méthanol légèrement acidifiée par de l'acide chlorhydrique à 10 %. La suspension de polymère est filtrée puis séchée.

A titre comparatif on répète l'essai 1 avec le produit A.

Les résultats obtenus, sur le polymère final sont les suivants:

| Composante | ESSAI | Productivité en g de polyethylène par g de composante | $MI_5$ | $MI_{21}$ | $MI_{21}/MI_5$ | $MI_5/MI_2$ |
|---|---|---|---|---|---|---|
| B | 1 | 2 800 | 0,5 | 13 | 26 | NS |
| A | 1 comparatif | 775 | 0,87 | 14,2 | 16,3 | NS |
| B | 2 | 1 500 | 4,3 | NS | NS | 5 |

NS = non significatif. Soit $I_2$ est trop faible pour être mesuré soit $I_{21}$ est trop grand pour être mesuré correctement

## EXEMPLE 2

### a) Préparation de la composante catalytique

La composante C est préparée dans les conditions d'obtention de la composante A de l'exemple 1 sauf la durée du cobroyage qui est de 8 heures.

Quantité de $MgCl_2$ anhydre     :10 g

Quantité de TiCl₄ :0,66 ml

On obtient un produit C contenant 2,5 % en poids de titane.

D'une part : 3,6 g du solide C sont traités dans l'heptane par ClAl(C₂H₅)₂ à la concentration de 0,7 M/l (Al/Ti = 17,7) pendant 2 heures à 80°C. Après 4 lavages de chacun 60 ml d'heptane à l'abri de l'air le solide est mis en contact avec 30 ml de TiCl₄ pendant 2 heures à 100°C. Après lavages à l'heptane et séchage sous vide on récupère le solide D contenant 3,8 % en poids de titane et 0,8 % en poids d'aluminium.

D'autre part : 3 g du solide C sont traités dans l'heptane par du triéthylaluminium à la concentration de 1,2 M/l (Al/Ti = 15) pendant 2 heures à 80°C. Après lavages à l'heptane et séchage sous vide le solide est mis en contact avec 30 ml de TiCl₄ pendant 2 heures à 100°C. Après lavages à l'heptane et séchage sous vide on récupère le solide E contenant 11,5 % en poids de titane et 1,5 % en poids d'aluminium.

b) Polymérisation de l'éthylène en suspension

Les composantes D, E et C, à titre comparatif, sont chacune engagées en homopolymérisation de l'éthylène dans les conditions de l'Exemple 1 sauf en ce qui concerne les pressions d'hydrogène.

Les résultats obtenus, sur le polymère final sont les suivants :

| Composante | Pression $H_2$ en bars | Productivité g/PE pag g/composante | $MI_5$ | $MI_{21}$ | $MI_{21}/MI_5$ |
|---|---|---|---|---|---|
| D | 4,3 | 2 500 | 0,77 | 18 | 23,4 |
| E | 4 | 1 100 | 0,60 | 13 | 21,7 |
| C | 4,3 | 2 500 | 1,33 | 22,8 | 17 |

EXEMPLE 3

a) Préparation de la composante catalytique

10 g de MgCl₂ anhydre et 1,15 ml de TiCl₄ sont traités dans les conditions de l'exemple 1, sauf la durée du cobroyage qui est de 16 heures.

Le produit obtenu est traité dans l'heptane par du triethylaluminium à la concentration de 0,5 M/l (Al/Ti = 2) pendant 2 heures à 90°C. Après lavage à l'heptane le solide est traité par 1,5 ml de VCl₄ pendant 30 minutes à 80°C. Après lavage à l'heptane puis séchage sous vide on obtient un solide F contenant : 3,7 % en poids de Ti, 4,4 % en poids de V et 1,72 % en poids d'Al.

b) Copolymérisation de l'éthylène et du butène-1 en phase vapeur

On utilise pour la polymérisation en phase vapeur un réacteur en inox de 2,5 l, de forme sphérique, muni d'une agitation par pale tournant à 250 tours/minute. La température est régulée à 85°C. On introduit, à 85°C, dans le réacteur les réactifs dans l'ordre suivant : trihexylaluminium (0,7 mM), butène jusqu'à une pression partielle de 1,8 bar, éthylène 8,2 bars et hydrogène 2 bars.

La composante F, en quantité correspondant à 2,5 mg de Ti est injectée dans le réacteur, la pression totale (12 bars) est maintenue constante par addition continue d'un mélange éthylène-butène à 3,7 % molaire de butène. Au bout d'1 heure de réaction, le réacteur est dégazé et refroidi, on récupère une poudre de polymère de composition 17,8 branchements éthyles pour 1000 carbones. Les autres caractéristiques sont les suivantes :

| Composante | Productivité g/PE par g/composante | MI$_2$ | MI$_5$/MI$_2$ |
|---|---|---|---|
| F | 3 000 | 1,54 | 4,9 |

## EXEMPLE 4

### a) Copolymérisation de l'éthylène et du butène-1 en phase vapeur

La composante E de l'exemple 2 est engagée en copolymérisation de l'éthylène et du butène dans les mêmes conditions que l'exemple 3, sauf : pression partielle d'hydrogène 7,5 bars, pression partielle de butène 0,8 bar et pression partielle d'éthylène 4,2 bars. La température est régulée à 65°C et la composition du mélange gazeux éthylène-butène alimentant le réacteur est de 3,54 % molaire de butène.

A titre comparatif on répète l'essai avec la composante C :

| Composante | Productivité g/PE par g/composante | MI$_2$ | MI$_{21}$/MI$_2$ |
|---|---|---|---|
| E | 1 500 | 1 | 65 |
| C | 2 000 | 1,8 | 35 |

## EXEMPLE 5

### a) Préparation de la composante catalytique

Dans un réacteur sous atomosphère inerte est introduite une solution de dibutylmagnésium 0,5 M/l, de tétraisobutylaluminoxane 0,025 M/l, et d'éther disecbutylique (EDSB) 0,03 M/l. Cette solution est maintenue sous agitation à 50°C pendant environ 16 heures. On ajoute ensuite lentement dans le réacteur un mélange de chlorure de tertiobutyle (tBuCl), en quantité telle que le rapport en poids tBuCl/Mg = 3, et d'éther disecbutylique, en quantité telle qu'à la fin de l'ajout le rapport en poids EDSB/Mg = 0,6. La température et l'agitation sont maintenues pendant 3 heures. Le solide obtenu est filtré et lavé à l'hexane puis remis en suspension dans l'hexane. On fait barboter HCl anhydre pendant 30 minutes à température ambiante. Après lavage et filtration le solide est remis en suspension dans TiCl$_4$ et maintenu à 90°C pendant 2 heures. Après filtration, lavage et séchage sous atmosphère inerte on obtient une composante G à morphologie sphérique contenant 3,1 % en poids de titane.

La composante catalytique G est traitée dans l'heptane par du triéthylaluminium à la concentration de 600 mM/l, avec un rapport molaire AL/Ti = 23, pendant 1 heure à 60°C. Après lavage à l'heptane et séchage en milieu inerte, le solide intermédiaire obtenu est traité par TiCl$_4$ à 90°C pendant 2 heures. Après lavage et séchage en milieu inerte la composante H obtenue a conservé sa morphologie sphérique et possède un taux de

7

titane de 7,3 % en poids.

b) Polymérisation de l'éthylène en suspension

La composante H est engagée en polymérisation de l'éthylène en suspension dans les conditions de l'exemple 1 sauf cocatalyseur : triisobutylaluminium 2,5 mM/l, diluant : hexane, température : 75°C, pression partielle d'hydrogène : 4,2 bars, pression partielle d'éthylène : 6,4 bars, durée de la polymérisation : 3 heures.
A titre comparatif, on répète l'essai avec la composante G.
Les résultats obtenus sont les suivants :

| Composante | Productivité en g PE/g composante | $MI_5$ | $MI_{21}$ | $MI_{21}/MI_5$ | MVA |
|---|---|---|---|---|---|
| G | 12 000 | 1,2 | 14,1 | 11,7 | 0,4 |
| H | 17 000 | 1 | 24 | 24 | 0,42 |

## EXEMPLE 6

a) Préparation de la composante catalytique

La composante catalytique G est traitée dans l'heptane par du dibutylmagnésium 150 mM/l avec un rapport molaire Mg/Ti = 1,5, pendant 2 heures à 80°C. Après lavage et siphonnage du solvant le solide intermédiaire est traité par $TiCl_4$ à 90°C pendant 2 heures. La composante I obtenue après lavage et séchage a conservé une morphologie sphérique et contient 3,9 % en poids de titane.

b) Polymérisation de l'éthylène en suspension

La composante catalytique I est engagée en polymérisation de l'éthylène dans les conditions de l'exemple 5. A titre comparatif sont rappelés les résultats acquis avec la composante G.

| Composante | Productivité en g PE/g composante | $MI_5$ | $MI_{21}$ | $MI_{21}/MI_5$ | MVA |
|---|---|---|---|---|---|
| G | 12 000 | 1,2 | 14,1 | 11,7 | 0,4 |
| I | 17 900 | 1,3 | 22,8 | 17,5 | 0,4 |

## EXEMPLE 7

### a) Préparation de la composante catalytique

La composante catalytique J est préparée de façon analogue à la composante catalytique G de l'exemple 5. La composante J a une morphologie sphérique et contient 1,6 % en poids de titane.

La composante catalytique J est traitée dans l'heptane par de l'hydrure de diéthylaluminium à la concentration de 180 mM/l et un rapport molaire Al/Ti = 2,5 pendant 2 heures à 80°C. Après lavage et siphonnage du solvant le solide intermédiaire est traité par $TiCl_4$ à 90°C pendant 2 heures. La composante K obtenue après lavage et séchage possède les caractéristiques suivantes : Ti = 5,7 % en poids et morphologie sphérique.

### b) Polymérisation de l'éthylène en suspension

Les composantes J et K sont engagées en polymérisation de l'éthylène dans les conditions de l'exemple 5.

| Composante | Productivité en g PE/g composante | $MI_5$ | $MI_{21}$ | $MI_{21}/MI_5$ | MVA |
|---|---|---|---|---|---|
| J | 17 700 | 1,15 | 13,2 | 11,4 | 0,42 |
| K | 26 400 | 0,48 | 7,8 | 16,2 | 0,4 |

## Revendications

1. Procédé de polymérisation de l'éthylène ou de copolymérisation de l'éthylène avec une alpha-oléfine, en suspension ou en phase gazeuse en présence d'un catalyseur constitué d'un cocatalyseur et d'une composante catalytique contenant au moins du titane, du magnésium et du chlore caractérisé en ce que dans une première étape on fait subir à la composante catalytique constitué d'au moins un dérivé du magnésium et d'un dérivé chloré du titane sous forme $Ti^{III}$ et/ou $Ti^{IV}$, préalablement à sa mise en oeuvre, un traitement de réduction qui est arrêté lorsqu'au moins 50 % en poids du titane initial a son degré d'oxydation réduit d'au moins une unité, le rapport molaire du métal réducteur/titane étant supérieure à 2, et en ce que dans une seconde étape, on traite le produit de la première étape par un composé chloré de métal de transition.

2. Procédé selon la revendication 1 caractérisé en ce que le traitement de réduction est arrêté lorsque le degré de réduction moyen du titane est le plus voisin de II.

3. Procédé selon l'une des revendications 1 ou 2 caractérisé en ce que le réducteur est un composé métallique possédant au moins une liaison métal-carbone ou métal-hydrogène.

4. Procédé selon l'une des revendications 1 à 3 caractérisé en ce que le réducteur est choisi :
   parmi les produits de formules : $MQ_y cl_{z-y}$ et $MQ'_c X_d H_e$ où :
   M est un métal des groupes I, II et III de la classification périodique
   Q et Q' étant un radical hydrocarboné ou cyclique
   X et cl ou choisi parmi les radicaux Q'
   avec z : un nombre correspondant à la valence maximale de M
        y : un nombre inférieur ou égal à z

$0 \leqq d \leqq 1,5$

$1 \leqq e \leqq z$

et $c + d + e = z$

parmi les produits d'addition entre eux des produits de formules précédentes et parmi les produits obtenus en pontant par un oxygène deux des produits de formules précédentes.

5. Procédé selon l'une des revendications 1 à 4 caractérisé en ce que la réduction s'effectue à une température comprise entre la température ambiante et 150° C.

6. Procédé selon l'une des revendications 1 à 5 caractérisé en ce que le composé chloré de métal de transition est choisi parmi les chlorures, alcoxychlorures ou oxychlorures de métal de transition.

7. Procédé selon l'une des revendications 1 à 6 caractérisé en ce que le traitement de la seconde étape s'effectue à une température comprise entre la température ambiante et 150° C.

8. Procédé selon l'une des revendications 1 à 7 caractérisé en ce que la quantité mise en oeuvre de composé chloré de métal de transition est d'au moins la moitié de la stoechiométrie par rapport à la teneur en titane du produit obtenu en fin de première étape.

9. Procédé de traitement d'une composante catalytique contenant au moins du titane, du magnésium et du chlore caractérisé en ce qu'on lui fait subir un traitement de réduction suivi d'un traitement par un composé chloré selon l'une des revendications 1 à 8.

## Claims

1. A process for the polymerization of ethylene or the copolymerization of ethylene with an alpha olefin, in suspension or in the gaseous phase, in the presence of a catalyst formed by a cocatalyst and a catalytic component containing at least titanium, magnesium and chlorine, characterized in that in a first stage the catalytic component, formed by at least one derivative of magnesium and a chlorinated derivative of titanium in the form $ti^{III}$ and/or $ti^{IV}$ is subjected, prior to its utilization to a reducing treatment which is stopped when at least 50% by weight of the initial titanium has its degree of oxydation reduced by at least one unit, the reducing metal/ titanium molar ratio being greater than 2, and in a second stage the product of the first stage is treated with a chlorinated transition metal compound.

2. A process according to claim 1, characterized in that the reducing treatment is stopped when the mean degree of reduction of the titanium is closest to II.

3. A process according to one of claims 1 or 2, characterized in that the reducing agent is a metal compound having at least one metal-carbon or metal-hydrogen bond.

4. A process according to one of claims 1 to 3, characterized in that the reducing agent is selected:

from the products of formulae: $MQ_y Cl_{z-y}$ and $MQ'_c X_d H_e$ where:

M is a metal of groups I, II and III of the periodic table of elements,

Q and Q' being a linear or cyclic hydrocarbon radical

X is Cl or selected from the radicals Q'

with z: a number corresponding to the maximum valence of M

y: a number lower than or equal to z

$0 \leqq d \leqq 1.5$

$1 \leqq e \leqq z$

and $c + d + e = z$

from the products of addition amongst thenselves of the products having the preceding formulae and from the products obtained by bridging with one oxygen two of the products having the preceding formulae.

5. A process according to one of claims 1 to 4, characterized in that reduction is performed at a temperature between ambient temperature and 150°C.

6. A process according to one of claims 1 to 5, characterized in that the chlorinated transition metal compound is selected from the transition metal chlorides, alkoxychlorides or oxychlorides.

7. A process according to one of claims 1 to 6, characterized in that the treatment of the second stage is performed at a temperature between ambient temperature and 150°C.

8. A process according to one of claims 1 to 7, characterized in that the quantity of chlorinated transition metal compound used is at least half the stoichiometry in relation to the titanium content of the product obtained at the end of the first stage.

9. A process for the treatment of a catalytic component containing at least titanium, magnesium and chlorine, characterized in that it is subjected to a reducing treatment followed by a treatment with a chlorinated compound, according to one of claims 1 to 8.

## Patentansprüche

1. Verfahren zur Polymerisation von Ethylen oder zur Copolymerisation von Ethylen mit einem alpha-Olefin in Suspension oder in der Gasphase, in Gegenwart eines Katalysators, der aus einem Cokatalysator und einer katalytischen Verbindung besteht, die mindestens Titan, Magnesium und Chlor enthält, dadurch gekennzeichnet, daß man im ersten Schritt die katalytische Verbindung, die zumindest aus einer Magnesiumverbindung und einer chlorierten Titanverbindung, in Form von Ti(III) und/oder Ti(IV), besteht, vor ihrer Anwendung einer Reduktion unterwirft, die beendet wird, sobald zumindest 50 Gewichtsprozent des anfänglichen Titans seine Oxidationszahl um mindestens eine Einheit vermindert hat, wobei das molare Verhältnis Reduktionsmittel zu Titan größer als zwei ist und daß in einem zweiten Schritt das Produkt des ersten Schritts mit einer chlorierten übergangsmetallverbindung behandelt wird.

2. Verfahren nach Anspruch 1, dadurch gekennzeichnet, daß die Reduktion gestoppt wird, sobald die mittlere Oxidationszahl des Titans sehr nahe dem Wert II gekommen ist.

3. Verfahren nach einem der Ansprüche 1 oder 2, dadurch gekennzeichnet, daß das Reduktionsmittel eine Metallverbindung darstellt, die mindestens über eine Metall-Kohlenstoffbindung oder Metall-Wasserstoffbindung verfügt.

4. Verfahren nach einem der Ansprüche 1 bis 3, dadurch gekennzeichnet, daß das Reduktionsmittel ausgewählt wird aus:
   Produkten der Formeln
   $MQ_yCl_{z-y}$ und $MQ'_cX_dH_e$, wobei
   M ein Metall der I., II. und III. Gruppe des Periodensystems darstellt,
   Q und Q' einen linearen oder zyklischen Kohlenwasserstoffrest darstellen,
   X gleich Cl ist oder aus den Resten Q' ausgewählt wird,
   mit z: einer Zahl, die der maximalen Oxidationsstufe von M entspricht
   $\quad$ y: einer Zahl kleiner oder gleich z
   $\quad$ $0 \leqq d \leqq 1,5$
   $\quad$ $1 \leqq e \leqq z$ und
   $\quad$ $c + d + e = z$,
   den Additionsprodukten aus den Produkten der vorstehend genannten Formeln und den Produkten, die bei der überbrückung zweier Produkte der vorstehend genannten Formeln mit einem Sauerstoffatom erhalten werden.

5. Verfahren nach einem der Ansprüche 1 bis 4, dadurch gekennzeichnet, daß die Reduktion bei einer Temperatur zwischen Raumtemperatur und 150°C durchgeführt wird.

6. Verfahren nach einem der Ansprüche 1 bis 5, dadurch gekennzeichnet, daß die chlorierte übergangsmetallverbindung ausgewählt wird aus Chloriden, Alkoxychloriden oder Oxychloriden von übergangsmetallen.

7. Verfahren nach einem der Ansprüche 1 bis 6, dadurch gekennzeichnet, daß die Behandlung im zweiten Schritt bei einer Temperatur zwischen Raumtemperatur und 150°C durchgeführt wird.

8. Verfahren nach einem der Ansprüche 1 bis 7, dadurch gekennzeichnet, daß die Menge an eingesetzter chlorierter übergangsmetallverbindung zumindestens die halbe stöchiometrische Menge in Bezug auf den Titangehalt des am Ende der ersten Schritts erhaltenen Produkts darstellt.

9. Verfahren zur Behandlung einer katalytischen Verbindung, die zumindestens Titan, Magnesium und Chlor enthält, dadurch gekennzeichnet, daß man sie einer Reduktion unterwirft und anschließend einer Behandlung mit einer chlorierten Verbindung nach einem der Ansprüche 1 bis 8.